# EUROPÄISCHE PATENTSCHRIFT

(11) **EP 0 717 485 B1**
(45) Veröffentlichungstag und Bekanntmachung des Hinweises auf die Patenterteilung: **12.05.1999**
(21) Anmeldenummer: 95119664.1
(22) Anmeldetag: 13.12.1995
(51) Int. Cl.: H02H 9/00, H01Q 1/50

(54) **Sicherheitsbarriere für hohe Datenraten**
Safety barrier for high speed data
Barrière de sécurité pour données à grand débit

(30) Priorität: 14.12.1994 DE 4444345
(43) Veröffentlichungstag der Anmeldung: 19.06.1996
(73) Patentinhaber: R. Stahl Schaltgeräte GmbH, D-74653 Künzelsau (DE)
(72) Erfinder: Bruch, Peter, D-74638 Waldenburg (DE)
(74) Vertreter: Patentanwälte Rüger, Barthelt & Abel

(56) Entgegenhaltungen:
- DE-A- 4 121 634
- DE-C- 3 622 268
- DE-U- 9 217 814
- FR-A- 2 029 554

## Beschreibung

Sicherheitsbarrieren, wie sie beispielsweise in der DE-C-38 22 268 beschrieben sind, dienen dazu, auf Leitungen, die von außen in einen explosionsgefährdeten Bereich führen, die elektrische Leistung zu begrenzen. Der Wert, auf den die Sicherheitsbarrieren diese Leistung begrenzen, hängt von dem Gefährdungspotential im explosionsgefährdeten Bereich ab und ist so bemessen, daß unter ungünstigsten Umständen ein von der elektrischen Energie auf dieser Leitung ausgelöster elektrischer Funke das Gas-Luft- oder Staub-Luft-Gemisch nicht zünden kann. Das über sie fließende elektrische Signal ist ein unipolares Gleichspannungssignal, dem gegebenfalls eine Wechselspannungskomponente überlagert ist, oder eine Wechselspannung.

Andererseits sollen die Sicherheitsbarrieren den auf der Leitung fließenden Strom und die zwischen den Adern der Leitung herrschende Spannung solange nicht beeinflussen, wie die übertragene elektrische Energie hinsichtlich Strom und Spannung unterhalb der festgelegten Grenzwerte bleibt.

Die dazu verwendeten Sicherheitsbarrieren sind Dreipole, d.h. eine der beiden Längsspannungen ist ständig null, während die andere Längsspannung idealerweise null oder fast null ist, solange der Strom, der durch die Sicherheitsbarriere hindurchfließt, kleiner bleibt als es dem festgelegten Grenzwert entspricht.

Im Einzelnen ist die Sicherheitsbarriere folgendermaßen aufgebaut. Sie enthält zwei Längszweige, über die zwei Eingangsanschlüsse mit zwei Ausgangsanschlüssen verbunden sind. In einem der beiden Längszweige ist eine Strombegrenzungseinrichtung enthalten, die im einfachsten Falle aus einem ohmschen Widerstand besteht. Zum Zweck der Spannungsbegrenzung enthält der eine Längszweig zusätzlich eine Schmelzsicherung, an deren der Ausgangsseite zugekehrten Ende ein Querzweig angeschlossen ist, über den die beiden Längszweige miteinander verbunden sind. Der Querzweig enthält eine Z-Diode oder eine Gruppe von Z-Dioden, um sicherzustellen, dass auch beim Überschreiten einer zulässigen Eingangsspannung die Spannung am Ausgang der Sicherheitsbarriere auf den maximal zulässigen Wert begrenzt wird. Im normalen Betriebszustand befindet sich die Z-Diode im Sperrzustand und wird erst leitend, wenn die Spannung am Eingang der Sicherheitsbarriere die zulässige Grenze überschreitet.

Obwohl die Z-Dioden im Normalbetriebsfall gesperrt sind, sind sie dennoch, elektrisch gesehen, nicht vollkommen zu vernachlässigen. Die Sperrschicht der Z-Dioden weist eine verhältnismäßig große Kapazität zwischen 100 pF und mehreren hundert pF auf. In Kombination mit der Impedanz der Zuleitung bzw. dem Eingangswiderstand der Z-Diode ergibt sich ein Tiefpaß bzw. ein Serienresonanzkreis, der eine Obergrenze für den Frequenzbereich festlegt, bis zu der die Sicherheitsbarriere sinnvollerweise betrieben werden kann. Diese Frequenz liegt bislang bei wenigen hundert kHz und ist bei modernen schnellen Datenübertragungen mit hoher Bitrate unzureichend.

Die DE-A-25 03 226 zeigt eine Sicherheitsbarriere, bei der im Querzweig zur Spannungsbegrenzung keine Leistungs-Z-Dioden, sondern für jede Polarität ein Triac verwendet wird. Damit der Triac bei einer definierten Spannung, die der Nominalspannug der Z-Diode entspricht, leitend wird, ist von dem Gate des betreffenden Triac zu der von dem Gate abliegenden Hauptelektrode eine Z-Diode geschaltet. Bei entsprechender Polarität am Eingang bleibt der Querzweig solange gesperrt, bis die Z-Diodenspannung erreicht ist. Beim Überschreiten der Z-Diodenspannung zündet die Z-Diode den Triac und der Strom wird vom Triac übernommen. Die umgekehrte Polarität hätte zur Folge, daß die Z-Diode in Rückwärtsrichtung betrieben, die somit umgehend leitend wird und den Querzweig durchschaltet. Um dies zu vermeiden, liegt in Serie zu der Parallelschaltung aus Z-Diode und Triac noch eine normale Diode, die den Betrieb in Rückwärtsrichtung verhindern soll.

Das DE-G-92 17 814 beschreibt ein Überspannungsschutzgerät für Antennenanlagen. Dieses Überspannungsschutzgerät weist zwei Längszweige auf, die die Eingangsanschlüsse mit Ausgangsanschlüssen verbinden. Zwischen den beiden Längs zweigen liegen parallelgeschaltet mehrere Querzweige, deren Zweck es ist, Überspannungen, die in den Eingang des Überspannungsschutzgerätes gelangen, vom Ausgang fernzuhalten. Die Querzweige dürfen aber andererseits auch bei hohen Frequenzen die Längs zweige nicht miteinander kurzschließen, weil sonst kein HF-Signal durch das Überspannungsschutzgerät hindurch gelangen könnte. Um dies zu erreichen, enthält der eine Querzweig eine Induktivität in Serie geschaltet mit einem Varistor. Die Induktivität soll den Hochfrequenzkurzschluss verhindern. Da andererseits zufolge der Induktivität auch die Ansprechgeschwindigkeit sinkt, ist zu diesem Querzweig ein Querzweig bestehend aus einem Kondensator und einer Z-Diodenanordnung parallelgeschaltet. Hierdurch wird der Kondensator unterhalb einer vorgegebenen Grenzspannung von den beiden Längszweigen gleichspannungsmäßig abgekoppelt. Um außerdem die Kapazität der Z-Diode möglichst unwirksam zu machen, liegt zu ihr noch eine kapazitätsarme Diode in Serie.

Ausgehend hiervon ist es Aufgabe der Erfindung, eine Sicherheitschaltung zu schaffen, die auf der abgehenden Seite die Zündschutzart "Eigensicherheit" gewährleistet und eine höhere Übertragungsrate zwischen dem Eingang und dem Ausgang ermöglicht.

Diese Aufgabe wird erfindungsgemäß durch die Sicherheitsschaltung mit den Merkmalen des Anspruches 1 gelöst.

Die Verwendung der kapazitätsarmen Diode in Serie mit der Spannungsbegrenzungsschaltung im Querzweig verkleinert deutlich die Wechselstromimpedanz im Querzweig. Die Kapazität ist jetzt näherungsweise nur noch so groß wie die Sperrschichtkapazität der kapazitätsarmen Diode, während sich am Spannungsbegrenzungsverhalten praktisch nichts ändert. Dadurch wird die von einer Nachrichtenquelle kommende Leitung am Eingang der Sicherheitsschaltung nicht mehr mit einer großen Kapazität abgeschlossen, so daß auch höherfrequente Signalanteile nicht mehr am Querzweig der Sicherheitsschaltung kurzgeschlossen werden. Sie können wegen der kleineren Kapazität des Querzweiges bis zum Ausgang der Sicherheitsschaltung weitergeleitet werden.

Die kapazitätsarme Diode zeichnet sich durch einen großen dynamischen Innenwiderstand aus, wenn die Spannung am Querzweig kleiner als der konstruktiv vorgegebene Spannungsgrenzwert ist, während andererseits ihre Kapazität im Bereich kleiner 60 pF liegt. Sobald die konstruktiv vorgegebene Grenzspannung der Sicherheitsschaltung überschritten wird, wird auch die kapazitätsarme Diode leitend und begrenzt die am Ausgang der Sicherheitsschaltung maximal auftretende Spannung.

Die neue Schaltungsanordnung kann sowohl bei der klassischen Sicherheitsbarriere mit galvanischer Durchverbindung verwendet werden als auch bei ähnlichen Schaltungen, die eine galvanische Trennung zwischen Eingang und Ausgang aufweisen und für die Übertragung von Wechselspannungssignalen bzw. Impulsen vorgesehen sind.

Die spannungsbegrenzende Schaltungsanordnung kann aus mehreren in Serie liegenden Dioden gebildet sein, von denen jede bekanntermaßen einen Spannungsabfall von ca. 0,6 Volt erzeugt oder es kann die spannungsbegrenzende Schaltung in bekannter Weise aus einer oder mehreren Z-Dioden bestehen. Eine andere Möglichkeit besteht darin, eine Vielzahl von normalen PN-Dioden in Serie oder gruppenweise parallel zu schalten, um die gewünschte Begrenzungsspannung zu erzeugen, während lediglich eine kapazitätsarme Diode zu der Gruppe aus normalen PN-Dioden in Reihe liegt.

In der Zeichnung sind Ausführungsbeispiele des Gegenstandes der Erfindung dargestellt. Es zeigen:
Fig. 1 ein Blockschaltbild für eine Sicherheitsbarriere mit mehreren Z-Dioden als spannungsbegrenzende Schaltung,
Fig. 2 ein Blockschaltbild einer Ausführungsform mit mehreren PN-Dioden als spannungsbegrenzende Schaltung,
Fig. 3 eine einer Sicherheitsbarriere ähnliche Sicherheitsschaltung jedoch mit einer galvanischen Trennung im Übertragungsweg und
Fig. 4 eine Sicherheitsschaltung ähnlich Fig.3 mit getrennter Signaleinspeisung.

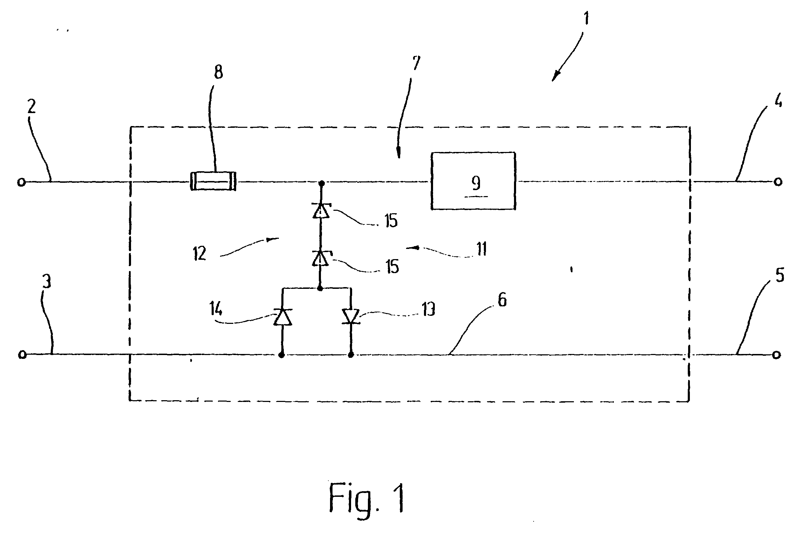

Fig. 1 zeigt gestrichelt eingerahmt das Blockschaltbild für eine schnelle Sicherheitsbarriere 1. Die Sicherheitsbarriere weist zwei Eingangsanschlüsse 2 bzw. 3 sowie zwei Ausganganschlüsse 4 bzw. 5 auf. Zwischen dem Eingangsanschluß 3 und dem Ausgangsanschluß 5 erstreckt sich ein Längszweig 6, während ein zweiter Längszweig 7 den Eingangsanschluß 2 mit dem Ausgangsanschluß 4 verbindet.

Der Längszweig 6 ist eine unmittelbare galvanische Durchverbindung zwischen dem Eingangsanschluß 3 und dem Ausgangsanschluß 5. Der Längszweig 7 enthält dagegen in einer Serienschaltung eine Schmelzsicherung 8 sowie eine Strombegrenzungseinrichtung 9, die im einfachsten Falle ein Ohmscher Widerstand ist oder, wenn andere Kennlinien gefordert sind, eine elektronische Steuerung enthalten kann, die ähnlich aufgebaut ist wie ein in der Sättigung betriebenes, durch einen Längstransistor geregeltes Netzteil. Die Schaltung für eine solche Strombegrenzungseinrichtung, die in Fig. 1 lediglich als Block veranschaulicht ist, ist in der DE-C-36 22 268 im einzelnen beschrieben.

Die Strombegrenzungseinrichtung 9 liegt zwischen der Schmelzsicherung 8 und dem Ausgangsanschluß 4.

Die beiden Längs zweige 6 und 7 sind durch einen Querzweig 11 miteinander verbunden. Dieser Querzweig 11 enthält die Serienschaltung aus einer spannungsbegrenzenden Schaltungsanordnung 12 und zwei damit in Serie liegenden antiparallel geschalteten PN-Dioden 13 und 14 mit kleiner Kapazität. Er ist einends zwischen der Schmelzsicherung 8 und der Strombegrenzungseinrichtung 9 angeschlossen. Die Spannungsbegrenzungsschaltung 12 ist letztlich ein Zweipol, der unterhalb einer an ihm anliegenden Spannung einen hohen Innenwiderstand hat und dessen Innenwiderstand sich sprunghaft ändert, sobald die vorgegebene Grenzspannung überschritten wird. Oberhalb der Grenzspannung hat die spannungsbegrenzende Schaltungsanordnung 12 einen kleinen dynamischen Innenwiderstand.

Eine sehr einfache spannungsbegrenzende Schaltungsanordnung wird beispielsweise mit Hilfe von mehreren, im gezeigten Ausführungsbeispielen insgesamt zwei entsprechend dimensionierten Z-Dioden 15 aufgebaut. Aus Gründen der zulässigen Oberflächentemperaturen bei Sicherheitsbarrieren liegen zwei Z-Dioden 15 jeweils in Serie.

Ferner ist ebenfalls aus Gründen der Zuverlässsigkeit bei Sicherheitsbarrieren der Querzweig redundant aufgebaut, weshalb in praxi zwei wie der Querzweig 11 aufgebaute Querzweige parallel geschaltet sind (der zweite Querzweig ist weil für das Verständnis der Erfindung nicht notwendig nicht veranschaulicht). Dadurch wird ein ordnungsgemäßes Funktionieren der Sicherheitsbarriere gewährleistet, selbst dann, wenn eine der Z-Dioden eine Unterbrechung aufweisen würde. Die Z-Dioden 15 sind alle in gleicher Richtung gepolt und zwar liegen sie mit ihrer Kathode an dem Längszweig 7. Ihre Anode hingegen ist mit der Anode der kapazitätsarmen Diode 13 sowie der Kathode der Diode 14 verbunden; die jeweils ander Elektrode der Dioden 13, 14 liegt an dem Längszweig 6.

Aufgrund der inneren Beschaltung ist die gezeigte Sicherheitsbarriere 1 ein Dreipol, weil wegen der galvanischen Durchverbindung mit Hilfe des Längszweiges 6 zwischen dem Eingangsanschluß 3 und dem Ausgangsanschluß 5 keine Längsspannung auftreten kann.

Die Arbeitsweise der gezeigten Sicherheitsbarriere 1 ist wie folgt:

An die Eingangsanschlüsse 2, 3 wird eine nicht veranschaulichte Gleichspannungsquelle angeschlossen, um elektrische Energie in einen explosionsgefährdeten Bereich zu liefern, beispielsweise an einen Winkelcodierer, Inkrementalgeber oder einen anderen Wandler, der bei seiner Betätigung den über die Sicherheitsbarriere 1 fließenden Strom moduliert (Stromschleife). Die Polarität ist so gewählt, daß der Pluspol der Spannungsquelle mit dem Eingangsanschluß 2 verbunden wird.

Solange die Eingangsspannung zwischen den Eingangsanschlüssen 2 und 3 kleiner ist, als es der Dimensionierung des Querzweiges 11 entspricht, ist der Querzweig 11 gesperrt, und es fließt durch den Querzweig 11 praktisch kein Strom. Die Summe der Durchlaßspannungen der Z-Dioden 15 und der kapazitätsarmen Dioden 13, 14 wird nicht überschritten, so daß nur ihr großer Innenwiderstand wirksam ist. Ferner sei der aus den Ausgangsanschlüssen 4 und 5 durch einen Verbraucher beispielsweise dem Winkelcodierer oder einen Druckgeber gezogene Strom kleiner als der zulässige Grenzstrom. Unter diesen Umständen ist auch die Strombegrenzungseinrichtung 9 praktisch durchgeschaltet, d.h. der an den Ausgangsanschlüssen 4 und 5 angeschlossene Verbraucher kann ohne Beeinträchtigung durch die Strombegrenzungseinrichtung 9 Strom aus der Sicherheitsbarriere 1 ziehen. In dieser Betriebssituation ist im Idealzustand die Sicherheitsbarriere 1 aus der Sicht eines an die Eingangsanschlüsse 2 und 3 angeschlossenen Meßwandlers ebensowenig sichtbar, wie aus der Sicht eines an die Ausgangsanschlüsse 4 und 5 angeschlossenen Gebers in Gestalt beispielsweise des Winkelcodierers Fernthermometers, eines Druckgebers und dergleichen.

Sobald jedoch beispielsweise wegen eines Kurzschlusses ein übermäßiger Strom an den Ausgangsanschlüssen 4 und 5 in den gefährdeten Bereich fließen würde, wird die Strombegrenzungseinrichtung 9 aktiv und begrenzt den Strom auf den maximal zulässigen Höchststrom.

Sollte andererseits die von der Meßelektronik oder einem Stromversorgungsteil in Eingangsanschlüsse 2 und 3 eingespeiste Spannung größer werden, als sie maximal über die Ausgangsanschlüsse 4 und 5 in den gefährdeten Bereich weitergeleitet werden darf, werden die in dem Querzweig 11 enthaltenen Dioden 13, 15 in den stromleitenden Bereich gesteuert. Die Folge ist ein momentan größerer Strom, der die Schmelzsicherung 8 zum Durchbrennen bringt. Ein Weiterleiten der gefährlich hohen Spannung im gefährdeten Bereich ist damit ausgeschlossen.

Eine Spannung mit umgekehrter Polarität an den Eingangsanschlüsssen 2, 3 führt dazu, daß die Z-Dioden 15 und die kapazitätsarme Diode 14 leitend werden, was dann auch die Sicherung 8 durchbrennen läßt.

Allerdings ist der gesperrte Querzweig 11 elektrisch nicht völlig unwirksam. Die Dioden 13, 14 und 15 haben im Sperrzustand eine Sperrschichtkapazität, die zu den Eingangsanschlüssen 2 und 3 bzw. den Ausgangsanschlüssen 4 und 5 ständig parallel liegt. In Verbindung mit der Zuleitungsimpedanz, die an die Eingangsanschlüsse 3 und 4 angeschlossen ist, entsteht ein Tiefpaß in Form eines L-Gliedes bildet. Übliche Kapazitätswerte für die Z-Dioden bewegen sich im Bereich zwischen einigen Hundert pF bis 1 nF. Wegen der paarweisen Verwendung der Z-Dioden 15 in parallelen Querzweigen bleibt eine Kapazität übrig, die etwa der Kapazität einer einzelnen Z-Diode 15 entspricht. Sie ist so hoch, daß im praktischen Betrieb die maximal mögliche Signalfrequenz, die mit Hilfe der Sicherheitsbarriere 1 übertragen werden kann, auf wenige Hundert Kilohertz beschränkt ist.

Durch die Serienschaltung mit den kapazitätsarmen Dioden 13, 14, die eine Kapazität von weniger als 60 pF, vorzugsweise sogar weniger als 5 pF aufweisen, erhöht sich die Grenzfrequenz des Tiefpasses entsprechend, so daß größere Signalfrequenzen über die Sicherheitsbarriere 1 übertragen werden können.

Die Verwendung der kapazitätsarmen Dioden 13, 14 ändert das Wechselspannungsübertragungsverhalten der Sicherheitsbarriere 1 deutlich, ohne daß die Sicherheitsfunktion darunter leidet. Denn letzlich hat die Parallelschaltung der beiden kapazitätsarmen Dioden 13, 14 ein ähnliches Gleichstromübertragungsverhalten wie die Z-Dioden, lediglich mit dem Unterschied, daß die Sperrschichtkapazität um wenigstens eine Zehnerpotenz kleiner ist und die Durchlaßspannung ca. 0,6 Volt beträgt, wenn es sich um eine Silizium-Sperrschichtdiode handelt.

Wenn durch andere Maßmahmen ausgeschlossen werden kann, daß eine Spannung mit falscher Polarität in die Sicherheitsbarriere gelangen kann, kann die Diode 14 auch entfallen.

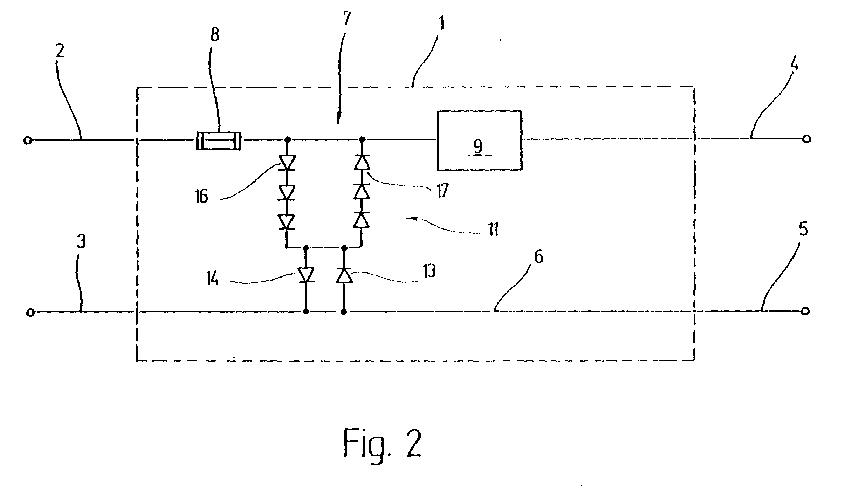

In Fig. 2 ist eine abgewandelte Sicherheitsbarriere 1 veranschaulicht, die zur Übertragung einer bipolaren Wechselspannung geeignet ist. Der Querzweig ist deswegen so aufgebaut, daß er für beide Polaritäten an den Eingangsanschlüssen bei betragsmäßig gleichen Spannungen begrenzt. Im Querzweig 11 sind anstelle der Z-Dioden 15 zwei antiparallel geschaltete Serienschaltungen aus einfachen PN-Dioden 16, 17 enthalten. Diese brauchen nicht hinsichtlich einer besonders geringen Kapazität selektiert zu werden, wenn sie mit den kapazitätsarmen Diode 13, 14 in Serie liegen, da deren Kapazität im wesentlichen die Gesamtkapazität des Querzweiges 11 festlegt.

Die Funktionsweise der Sicherheitsbarriere 1 nach Fig. 2 ist im wesentlichen wie oben beschrieben. Der Unterschied ist lediglich, daß sich die Sicherheitsbarriere 1 unabhängig von der Polarität der Eingangsspannung gleich verhält.

Wenn ganz besonders niedrige Kapazitäten für den Querzweig 11 gefordert sind, kann der Querzweig 11 auch ausschließlich aus einer entsprechenden Serienschaltung von kapazitätsarmen Dioden 13, 14 aufgebaut werden. In diesem Falle werden soviele kapazitätsarme Dioden 13 oder 14 in Serie geschaltet, bis ihre Durchlaßspannung von jeweils 0,6 Volt der gewünschten Nennspannung der Sicherheitsbarriere entspricht.

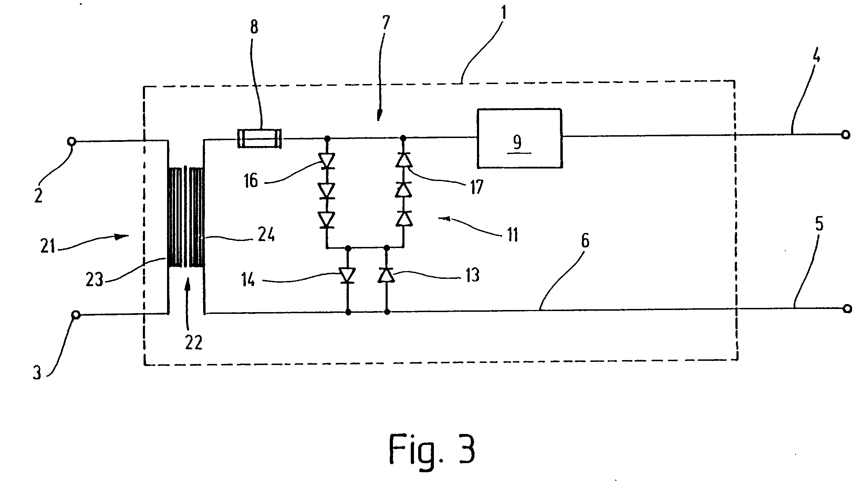

Fig. 3 zeigt eine Abwandlung der Sicherheitsbarriere nach Fig. 2. Während bei der Sicherheitsbarriere nach Fig. 2 eine galvanische Verbindung zwischen den beiden Eingängen 2, 3 einerseits und den beiden Ausgängen 4, 5 bestanden hat, enthält die Sicherheitsschaltung nach Fig. 3 eine Anordnung 21 zur galvanischen Trennung. Dadurch sind die beiden Ausgänge 4, 5 von den Eingängen 2, 3 galvanisch entkoppelt. Die Anordnung nach Fig. 3 läßt sich auf diese Weise gedanklich in eine klassische Sicherheitsbarriere und die Anordnung zur galvanischen Trennung aufteilen. Mit Hilfe der nachgeschalteten Sicherheitsbarriere wird sichergestellt, daß auch bei Fehlern am Eingang 2, 3 an dem Ausgang 4, 5 keine Spannungen oder Ströme auftreten können, die die Grenzwerte für die Zündschutzart "Eigensicherheit" übersteigen.

Bei der Sicherheitsschaltung nach Fig. 3 wird die Anordnung 21 von einem Transformator 22 gebildet, der zwei galvanisch voneinander getrennte Wicklungen 23 und 24 aufweist. Die Wicklung 23 bildet mit ihren Anschlüssen die Eingangsanschlüsse 2 und 3, während die galvanisch getrennte Wicklung 24 an die beiden Längszweige 6 und 7 angeschlossen ist.

Die Beschaltung der Längszweige 6 und 7 sowie des Querzweigs 11 ist in der gleichen Weise ausgeführt, wie dies im Zusammenhang mit Fig. 2 bereits erläutert ist, weshalb eine neuerliche Beschreibung entfallen kann.

Ein in die Eingänge 2 und 3 eingespeistes Wechselspannungssignal wird galvanisch getrennt den beiden Längszweigen 6 und 7 zugeführt. Solange die von dem Transformator 22 an die Längszweige 6, 7 abgegebene Spannung hinsichtlich des Scheitelwertes kleiner ist als diejenige Spannung, bei der der Querzweig 11 leitend wird, erfolgt keine Begrenzung. Diese Betriebssituation ist der Normalfall. Erst, wenn an den Eingängen 2, 3 eine Überspannung eingespeist wird, wird der Querzweig 11 in der gleichen Weise leitend, wie dies in diesem Zusammenhang mit den vorhergehenden Ausführungsbeispielen bereits erläutert wurde.

Die in Fig. 3 gezeigte Schaltung ist zufolge der beiden antiparallel geschalteten kapazitätsarmen Dioden 13, 14 aus der Sicht der beiden Eingangsanschlüsse 2, 3 ebenfalls kapazitätsarm, so daß die neue Schaltung dazu geeignet ist, vergleichsweise hohe Datenraten zu übertragen. Die niedrige Eingangskapazität, die sich aus der Verwendung der beiden kapazitätsarmen Dioden 13, 14 ergibt, liefert zusammen mit der unvermeidbaren Induktivität der an den beiden Eingangsanschlüssen 2, 3 angeschlossenen Leitung eine vergleichsweise hohe Grenzfrequenz des aus den Leitungen und der Eingangskapazität der Sicherheitsschaltung gebildeten Tiefpass.

Anstatt wie in Fig. 3 gezeigt, den Transformator 22 zwischen die Eingangsanschlüsse 2, 3 und die beiden Längszweige 6, 7 zu schalten, besteht auch die Möglichkeit, den Transformator 22 zur galvanischen Trennung zwischen Eingang und Ausgang an der Ausgangsseite anzuordnen. In diesem Falle bilden die Anschlüsse der einen Wicklung die beiden Ausgangsanschlüsse 4, 5, während die andere Wicklung mit den beiden Längszweigen 6, 7 verbunden ist.

Die galvanische Trennung zwischen den beiden Eingangsanschlüssen 2, 3 und den Ausgangsanschlüssen 4, 5 läßt sich auch mit Hilfe von Kondensatoren erreichen. Bei dieser, zeichnerisch nicht dargestellten, Schaltungsvariante entfällt der Transformator 22 und statt dessen ist zwischen dem Eingangsanschluß 2 und dem Längs zweig 7 ein Kondensator vorhanden, ebenso wie zwischen dem Eingangsanschluß 3 und dem Längszweig 6. Das grundsätzliche Schaltungsverhalten ist wie im Zusammenhang mit Fig. 3 erläutert.

Der Vollständigkeit halber sei noch erwähnt, daß diese Kondensatoren auch vor den Ausgangsanschlüssen 4, 5 angeordnet sein können.

Ferner ist mit allen Schaltungsvarianten der Fig. 1 bis 3 auch eine Signalübertragung aus dem explosionsgefährdeten Bereich heraus in den nicht gefährdeten Bereich möglich. Bei diesem Betriebsfall wird das zu übertragende Nutzsignal an den den beiden Ausgangsanschlüssen 4, 5 eingespeist und auf der nicht sicheren Seite an den Eingangsanschlüssen 2, 3 abgenommen.

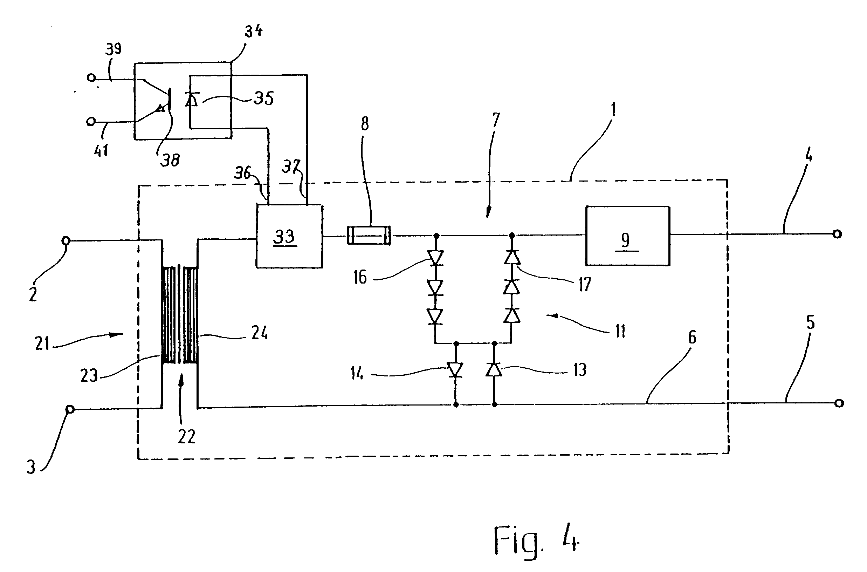

Fig. 4 zeigt eine Sicherheitsschaltung, die ähnlich aufgebaut ist wie die Sicherheitsschaltung nach Fig. 3 bzw. Fig. 1. Die in dieser Schaltung wiederkehrenden Bauelemente sind mit denselben Bezugszeichen versehen wie bei den vorhergehenden Ausführungsbeispielen und nicht erneut beschrieben.

Die in Fig. 4 gezeigte Sicherheitsschaltung dient dazu, aus einem sicheren nicht explosionsgefährdeten Bereich heraus ein im explosionsgefährdeten Bereich befindliches elektrotechnisches Gerät oder eine elektronische Schaltung mit einer Wechselspannung zu versorgen. In dem Längszweig 7 ist vor der Sicherung 8 ein Strom/Spannungswandler 33 angeordnet. Dieser Strom/Spannungswandler 33 kann im einfachsten Falle ein ohmscher Widerstand sein. An den Strom/Spannungswandler 33 ist mit seinem Eingang ein Optokoppler 34 angeschlossen, dessen Leuchtdiode mit ihren Anschlußklemmen an entsprechenden Ausgängen 36, 37 des Strom/Spannungswandlers 33 angeschaltet ist. Der Optokoppler 34 weist ausgangsseitig einen Fototransistor 38 auf, dessen Emitter und dessen Kollektor Ausgänge 39, 41 bilden. Auf diese Weise kann über den Optokoppler 34 auf der nicht explosionsgefährdeten Seite galvanisch getrennt ein Informationssignal ausgekoppelt werden.

Eine Sicherheitsschaltung enthält im Querzweig zusätzlich wenigstens eine in Durchlaßrichtung betriebene kapazitätsarme Diode, um die Eingangskapazität der Sicherheitsbarriere niedrig zu halten, so daß sie zur Übertragung hoher Frequenzen geeignet ist.

## Patentansprüche

1. Sicherheitsschaltung (1) zur Gewährleistung der Zündschutzart "Eigensicherheit" auf einer abgehenden zweipoligen Leitung,
mit einem ersten und einem zweiten Eingangsanschluß (2,3),
mit einem ersten und einem zweiten Ausgangsanschluß (4,5),
mit einem ersten und einem zweiten Längszweig (6,7), über die die Verbindung zwischen den beiden Eingangsanschlüssen (2,3) einerseits und den beiden Ausgangsanschlüssen (4,5) führt,
mit einer Strombegrenzungseinrichtung (9), die in wenigstens einem der Längszweige (6,7) enthalten ist und dazu dient den Strom auf Werte zu begrenzen, die unterhalb der Schwelle der Zündschutzart "Eigensicherheit" liegen,
mit einem zwischen den beiden Längszweigen (6,7) liegenden Querzweig (11), der wenigstens eine spannungsbegrenzende Schaltungsanordnung (12) enthält, die unterhalb einer vorbestimmten Spannung einen hohen Innenwiderstand und oberhalb der vorbestimmten Spannung einen kleinen dynamischen Innenwiderstand aufweist, wobei mit der spannungsbegrenzenden Schaltungsanordnung (12) wenigstens eine kapazitätsarme Diode (13,14) in Serie geschaltet ist, die bezogen auf die betriebsmäßige Polarität der spannungsbegrenzenden Schaltungsanordnung (12) in Durchlaßrichtung gepolt ist.

2. Sicherheitsschaltung nach Anspruch 1, dadurch gekennzeichnet, daß der erste Längszweig (6) eine galvanische Verbindung zwischen dem ersten Eingangsanschluß (3) und dem ersten Ausgangsanschluß (5) und der zweiten Längszweig (7) eine galvanische Verbindung zwischen dem zweiten Eingangsanschluß (2) und dem zweiten Ausgangsanschluß (4) bildet.

3. Sicherheitsschaltung nach Anspruch 1, dadurch gekennzeichnet, daß entweder zwischen den beiden Eingangsanschlüssen (2,3) und den beiden Längszweigen (6,7) oder zwischen den beiden Längszweigen (6,7) und den beiden Ausgangsanschlüssen (4,5) eine Anordnung (21) zur galvanischen Trennung enthalten ist.

4. Sicherheitsschaltung nach Anspruch 1, dadurch gekennzeichnet, daß die Anordnung (21) zur galvanischen Trennung von zwei Kondensatoren gebildet ist, von denen je einer in der Verbindung zwischen dem betreffenden Eingangsanschluß (2,3) bzw. Ausgangsanschluß (4,5) und dem zugehörigen Längszweig (6,7) liegt.

5. Sicherheitsschaltung nach Anspruch 1, dadurch gekennzeichnet, daß die Anordnung (21) zur galvanischen Trennung von wenigstens einem Transformator (23) mit zwei galvanisch getrennten Wicklungen (23,24) gebildet ist, von denen eine (24) mit ihren Anschlüssen mit den beiden Längszweigen (6,7) verbunden ist und von denen die andere (23) mit ihren beiden Anschlüssen an die Eingagsanschlüsse (2,3) oder die Ausgangsanschlüsse (4,5) angeschlossen ist.

6. Sicherheitsschaltung nach Anspruch 1, dadurch gekennzeichnet, daß die spannungsbegrenzende Schaltungsanordnung (12) mehrere in Serie liegende kapazitätsarme Dioden (13) enthält.

7. Sicherheitsschaltung nach Anspruch 1, dadurch gekennzeichnet, daß die spannungsbegrenzende Schaltungsanordnung (12) ausschließlich aus in Serie liegenden kapazitätsarmen Dioden (13,14) aufgebaut ist.

8. Sicherheitsschaltung nach den Anspruch 3, dadurch gekennzeichnet, daß die spannungsbegrenzende Schaltungsanordnung (12) wenigstens zwei antiparallel geschaltete kapazitätsarme Dioden (13) enthält.

9. Sicherheitsschaltung nach Anspruch 3, dadurch gekennzeichnet, daß die spannungsbegrenzende Schaltungsanordnung (12) ausschließlich aus antiparallel geschalteten kapazitätsarmen Dioden (13,14) aufgebaut ist.

10. Sicherheitsschaltung nach Anspruch 1, dadurch gekennzeichnet, daß die spannungsbegrenzende Schaltungsanordnung (12) wenigstens eine Z-Diode (15) enthält, die mit der wenigstens einen kapazitätsarmen Diode (13,14) in Serie liegt.

11. Sicherheitsschaltung nach Anspruch 1, dadurch gekennzeichnet, daß die spannungsbegrenzende Schaltungsanordnung (12) mehrere Z-Dioden (15) enthält, die mit der wenigstens einen kapazitätsarmen Diode (13,14) in Serie liegen.

12. Sicherheitsschaltung nach Anspruch 1, dadurch gekennzeichnet, daß die spannungsbegrenzende Schaltungsanordnung (12) mehrere in Serie geschaltete Z-Dioden (15) enthält, die mit der wenigstens einen kapazitätsarmen Diode (13,14) in Serie liegen..

13. Sicherheitsschaltung nach Anspruch 1, dadurch gekennzeichnet, daß die spannungsbegrenzende Schaltungsanordnung (12) mehrere parallel geschaltete Z-Dioden (15) enthält.

14. Sicherheitsschaltung nach Anspruch 1, dadurch gekennzeichnet, daß die spannungsbegrenzende Schaltungsanordnung (12) mehrere in Durchlaßrichtung gepolte Dioden (16) enthält, die mit der wenigstens einen kapazitätsarmen Diode (13) in Serie liegen.

15. Sicherheitsschaltung nach Anspruch 1, dadurch gekennzeichnet, daß die mehreren in Durchlaßrichtung gepolten Dioden parallel und/oder in Serie geschaltet sind.

16. Sicherheitsschaltung nach Anspruch 1, dadurch gekennzeichnet, daß die Kapazität der kapazitätsarmen Diode (13) kleiner als 60 pF, vorzugsweise kleiner als 15 pF, höchst bevorzugt kleiner als 5 pF ist.

17. Sicherheitsschaltung nach Anspruch 1, dadurch gekennzeichnet, daß ein Schaltungsanordnung (33) zum galvanisch getrennten Auskoppeln eines Informationssignals vorgesehen ist.

## Claims

1. Safety circuit (1) for assuring protection type "intrinsically safe" on an outgoing bipolar line,
with a first and a second input terminal (2, 3),
with a first and a second output terminal (4, 5),
with a first and a second series arm (6, 7), across which the connection between the two input terminals (2,3) on the one hand and the two output terminals (4, 5) is directed,
with a current limiting means (9), which is contained in at least one of the series arms (6, 7) and serves to limit the current to values lying below the threshold of protection type "intrinsically safe",
with a shunt arm (11), which is located between the two series arms (6, 7) and contains at least one voltage-limiting circuit arrangement (12), which below a predetermined voltage has a high internal resistance and above a predetermined voltage has a low dynamic internal resistance, whereby at least one anti-capacitance diode (13, 14) is connected in series with the voltage-limiting circuit arrangement (12), said diode being forward-biased in relation to the operational polarity of the voltage-limiting circuit arrangement (12).

2. Safety circuit according to Claim 1, characterised in that the first series arm (6) forms an electrical connection between the first input terminal (3) and the first output terminal (5), and the second series arm (7) forms an electrical connection between the second input terminal (2) and the second output terminal (4).

3. Safety circuit according to Claim 1, characterised in that an arrangement (21) for electrical isolation is included either between the two input terminals (2,3) and the two series arms (6, 7) or between the two series arms (6, 7) and the two output terminals (4,5).

4. Safety circuit according to Claim 1, characterised in that the arrangement (21) for electrical isolation is formed by two capacitors, one of which respectively lies in the connection between the corresponding input terminal (2, 3) or output terminal (4, 5) and the associated series arm (6, 7).

5. Safety circuit according to Claim 1, characterised in that the arrangement (21) for electrical isolation is formed by at least one transformer (23) with two electrically isolated windings (23, 24), one (24) of which is connected by its terminals to the two series arms (6, 7) and the other (23) is connected by its two terminals to the input terminals (2, 3) or the output terminals (4, 5).

6. Safety circuit according to Claim 1, characterised in that the voltage-limiting circuit arrangement (12) includes several anti-capacitance diodes (13) connected in series.

7. Safety circuit according to Claim 1, characterised in that the voltage-limiting circuit arrangement (12) is exclusively formed from anti-capacitance diodes (13, 14) connected in series.

8. Safety circuit according to Claim 3, characterised in that the voltage-limiting circuit arrangement (12) includes at least two anti-capacitance diodes (13) connected back-to-back.

9. Safety circuit according to Claim 3, characterised in that the voltage-limiting circuit arrangement (12) is exclusively formed from anti-capacitance diodes (13, 14) connected back-to-back.

10. Safety circuit according to Claim 1, characterised in that the voltage-limiting circuit arrangement (12) includes at least one Z diode (15) connected in series to the at least one anti-capacitance diode (13, 14).

11. Safety circuit according to Claim 1, characterised in that the voltage-limiting circuit arrangement (12) includes several Z diodes (15) connected in series to the at least one anti-capacitance diode (13, 14).

12. Safety circuit according to Claim 1, characterised in that the voltage-limiting circuit arrangement (12) includes several series-connected Z diodes (15) connected in series to the at least one anti-capacitance diode (13, 14).

13. Safety circuit according to Claim 1, characterised in that the voltage-limiting circuit arrangement (12) includes several Z diodes (15) connected in parallel.

14. Safety circuit according to Claim 1, characterised in that the voltage-limiting circuit arrangement (12) includes several forward-biased diodes (16) connected in series to the at least one anti-capacitance diode (13).

15. Safety circuit according to Claim 1, characterised in that the several forward-biased Z diodes are connected in parallel and/or in series.

16. Safety circuit according to Claim 1, characterised in that the capacitance of the anti-capacitance diode (13) is less than 60 pF, preferably less than 15 pF, and most preferred less than 5 pF.

17. Safety circuit according to Claim 1, characterised in that a circuit arrangement (33) is provided for electrically isolated decoupling of an information signal.

## Revendications

1. Circuit de sécurité (1) pour la protection de type à "Sécurité intrinsèque" d'une ligne de départ à deux pôles comprenant
une première et une deuxième borne d'entrée (2, 3)
une première et une deuxième borne de sortie (4, 5)
une première et une deuxième branche de circuit (6, 7) par l'intermédiaire desquelles passe la liaison entre les deux bornes d'entrée (2, 3) d'une part et les deux bornes de sortie (4, 5) d'autre part,
un dispositif de limitation de courant (9) qui est inséré dans au moins une des branches de circuit (6, 7) et sert à limiter le courant à des valeurs inférieures au seuil pour la protection à "Sécurité intrinsèque",
une branche en dérivation (11) qui est disposée entre les deux branches de circuit (6, 7) et contient au moins un circuit limiteur de tension (12) qui, en-dessous d'une tension prédéterminée, présente une forte résistance interne et, au-dessus de la tension prédéterminée, présente une faible résistance interne dynamique, au moins une diode (13, 14) à faible capacité qui, par rapport à la polarité de service du circuit limiteur de tension (12) est polarisée dans la direction passante, étant branchée en série avec le système de circuit (12) de limitation de tension,.

2. Circuit de sécurité selon la revendication 1, caractérisé par le fait que la première branche de circuit (6) forme une liaison galvanique entre la première borne d'entrée (3) et la première borne de sortie (5), tandis que la deuxième branche de circuit (7) forme une liaison galvanique entre la deuxième borne d'entrée (2) et la deuxième borne de sortie (4).

3. Circuit de sécurité selon la revendication 1, caractérisé par le fait qu'un dispositif (21) de séparation galvanique est placé soit entre les deux bornes d'entrée (2,3) et les deux branches de circuit (6, 7), soit entre les deux branches de circuit (6, 7) et les deux bornes de sortie (4,5).

4. Circuit de sécurité selon la revendication 1, caractérisé par le fait que le dispositif (21) de séparation galvanique est formé de deux condensateurs qui sont disposés chacun dans la liaison entre la borne d'entrée (2, 3) ou la borne de sortie (4, 5) concernée et la branche de circuit (6, 7) concernée.

5. Circuit de sécurité selon la revendication 1, caractérisé par le fait que le dispositif (21) de séparation galvanique est formé d'au moins un transformateur (23) avec deux enroulements (23, 24) séparés galvaniquement, parmi lesquels l'un (24) est connecté par ses bornes aux deux b ranches de circuit (6, 7) et l'autre (23) est connecté par ses deux bornes aux bornes d'entrée (2, 3) ou aux bornes de sortie (4, 5).

6. Circuit de sécurité selon la revendication 1, caractérisé par le fait que le système de circuit (12) de limitation de tension comprend plusieurs diodes (13) à faible capacité montées en série.

7. Circuit de sécurité selon la revendication 1, caractérisé par le fait que le circuit limiteur de tension (12) est constitué exclusivement de diodes (13, 14) à faible capacité branchées en série.

8. Circuit de sécurité selon la revendication 1, caractérisé par le fait que le circuit limiteur de tension (12) comprend au moins deux diodes (13) à faible capacité en branchement anti-parallèle.

9. Circuit de sécurité selon la revendication 1, caractérisé par le fait que le circuit limiteur de tension (12) est constitué exclusivement de diodes (13, 14) à faible capacité en montage anti-parallèle.

10. Circuit de sécurité selon la revendication 1, caractérisé par le fait que le circuit limiteur de tension (12) comprend au moins une diode Zener (15) qui est branchée en série avec la diode (13, 14) à faible capacité au nombre d'au moins une.

11. Circuit de sécurité selon la revendication 1, caractérisé par le fait que le circuit limiteur de tension (12) comprend plusieurs diodes Zener (15) qui sont branchées en série avec la diode (13, 14) à faible capacité au nombre d'au moins une.

12. Circuit de sécurité selon la revendication 1, caractérisé par le fait que le circuit limiteur de tension (12) comprend plusieurs diodes Zener (15) branchées en série qui sont branchées en série avec la diode (13, 14) à faible capacité au nombre d'au moins une.

13. Circuit de sécurité selon la revendication 1, caractérisé par le fait que le circuit limiteur de tension (12) comprend plusieurs diodes Zener (15) branchées en parallèle.

14. Circuit de sécurité selon la revendication 1, caractérisé par le fait que le circuit limiteur de tension (12) comprend plusieurs diodes (16) polarisées dans la direction passante qui sont branchées en série avec la diode (13, 14) à faible capacité au nombre d'au moins une.

15. Circuit de sécurité selon la revendication 1, caractérisé par le fait que les diodes (16) polarisées dans la direction passante sont connectées en parallèle et/ou en série.

16. Circuit de sécurité selon la revendication 1, caractérisé par le fait que la capacité des diodes (13) à faible capacité est inférieure à 60 pf, de préférence inférieure à 15 pf, mieux encore inférieure à 5 pf.

17. Circuit de sécurité selon la revendication 1, caractérisé par le fait qu'un circuit (33) est prévu pour découpler d'une manière isolée galvaniquement un signal d'information.
